# EUROPEAN PATENT APPLICATION

(11) **EP 4 207 418 A2**
(43) Date of publication of application: **05.07.2023**
(21) Application number: 22217380.9
(22) Date of filing: 30.12.2022
(51) Int. Cl.: H01M 10/0525, H01M 10/0565

(54) **IN-SITU POLYMERIZED SOLID-STATE BATTERY WITH MULTILAYER STRUCTURAL ELECTROLYTE AND PREPARATION METHOD THEREOF**

(30) Priority: 31.12.2021 CN 202111679481
(71) Applicant: Beijing WeLion New Energy Technology Co., Ltd, Beijing 102402 (CN)
(72) Inventor: LI, jiuming, BEIJING, 102402 (CN); LIU, shuai, BEIJING, 102402 (CN); ZHANG, xiaowei, BEIJING, 102402 (CN); YOU, meng, BEIJING, 102402 (CN); YANG, qi, BEIJING, 102402 (CN); YU, huigen, BEIJING, 102402 (CN)
(74) Representative: Lavoix

(57) **Abstract**

The present application provides an in-situ polymerized solid-state battery with a multilayer electrolyte, which comprises an oxidation-resistant polymer layer, which is formed in-situ on the positive electrode, and also comprises a reduction-resistant polymer layer, which is formed in-situ on the negative electrode. The oxidation-resistant polymer through chemical reaction is preset on the positive electrode during the mixing process. And a monomer or initiator that can form reduction-resistant polymer through chemical reaction is preset on the negative electrode plate during the mixing process. Then a monomer that reacts with the preset monomer or initiator is injected into the battery by liquid injection to initiate a polymerization reaction, and achieve in-situ polymerization inside the battery to form a multilayer electrolyte with an oxidation-resistant positive electrode and a reduction-resistant negative electrode, thereby improving the safety and cycle stability of the in-situ polymerized batterynd also reducing the interface impedance between the electrolyte and the electrode in the battery. This method is simple and easy to expand mass-production. The application also provides a preparation method of an in-situ polymerized solid-state battery with a multilayer electrolyte.

## Description

### TECHNICAL FIELD

The application relates to the technical field of lithium ion batteries, and particularly relates to an in-situ polymerized solid-state battery with a multilayer electrolyte, and a preparation method thereof.

### BACKGROUND ART

At present, large-scale commercialized lithium secondary batteries, which contain a large amount of flammable and easily leakable small-molecule solvent (organic carbonate), pose a major safety hazard. It is considered an effective way to solve these safety problems by using nonvolatile, using a nonflammable solid electrolyte instead of the traditional electrolyte. Among them, polymer electrolyte has become a research hotspot in recent years due to their low interface impedance and high safety. However, polymer electrolytes have not entered mass production, which is limited by the complex process and also by the unstable electrical properties of the polymer itself.

In order to regenerate the preparation process of polymer lithium battery and increase the production efficiency, researchers have proposed an in-situ curing technology, in which liquid monomers are injected into the interior of the battery cell. After infiltration, monomers initiate in-situ polymerization to form a solid-state battery under certain condition.

For example, CN105914405A proposes a method of injecting liquid epoxy compound and lithium salt into a battery, and initiating a ring-opening in-situ curing under heating condition to form an integrated all-solid-state polymer battery. In CN108493486A, acrylates and initiator are dissolved in electrolyte solution to inject into a battery. Unsaturated double bonds are initiated to polymerize under heating condition to form an integrated gel polymer battery. In CN111533851A, double bond monomers, containing small molecular alkene carbonate, ethylene glycol acrylate and an initiator are mixed to inject into the interface of a solid-state battery. Then polymerization is thermally-initiated to form an electrode-electrolyte integrated all-solid-state battery. In CN111540956A, isocyanate and polypropylene glycol are dissolved in electrolyte solution, and injected into the battery to form an integrated battery, thereby the impedance at electrode-electrolyte interface is reduced.

The voltage range of lithium-ion batteries is wide. Usually, a polymer material cannot meet the requirement of stability at both high- and low-voltage. In order to solve this problem, researchers have developed a multilayer composite electrolyte film. Particularly, oxidation-resistant polymer components on positive electrodes and reduction-resistant polymer components on negative electrodes significantly improve the electrochemical stability of the electrolyte. For example, CN109565078A provides a multilayer electrolyte. Films made from polyester and polyether are prepared by solvent volatilization. Then an ester with strong oxidation resistance, and an ether with strong ion conductivity and lower interface impedance are prepared into a composite membrane. As a result, the cycle stability of the assembled solid-state battery is significantly improved. In CN110048158A, a bilayer electrolyte membrane with ester on one side and ether on the other side is formed by in-situ polymerization on both sides of the porous membrane through pouring. The membrane meets the stability requirements of high-voltage positive electrode and low-voltage negative electrode. In CN110581314A, an inorganic solid electrolyte is coated on the supporting film, which is in contact with the positive electrode, while a polymer electrolyte is coated on the supporting film, which is in contact with the negative electrode. Thereby oxidation of the electrolyte is reduced, and the safety and cycle stability of the battery is improved. However, the reported processes for multilayer composite film are complicated. Since the films are coated outside the battery cell, and are needed to combine with the electrodes. The interface contact between electrolyte and electrode is poor, and the impedance is large, thereby it is detrimental for the not performance of the battery.

### SUMMARY OF THE APPLICATION

The present application provides an in-situ polymerized solid-state battery with a multilayer electrolyte and the preparation method thereof. The present application adopts a method of in-situ polymerization to form a multilayer electrolyte inside the battery, thus the positive electrode performs highly voltage-resistant and the negative electrode performs highly reduction-resistant, which greatly simplifies the preparation process of the battery with a multilayer electrolyte. The preparation method in the present application improves the interface contact between the electrode and electrolyte, thereby improving the safety and cycle stability of the battery cell. The methode is compatible with the existing lithium battery production technology and equipment; thus the battery can be mass-produced quickly.

The application provides an in-situ polymerized solid-state battery with a multilayer electrolyte, wherein the multilayer electrolyte comprises an oxidation-resistant polymer layer formed in-situ on the positive electrode, and a reduction-resistant polymer layer formed in-situ on the negative electrode.

The in-situ polymerized solid-state battery with a multilayer electrolyte is prepared according to the following steps:
A) mixing the first preset component with the positive electrode slurry and coating on the positive electrode to obtain a composite positive electrode; mixing the second preset component with the negative electrode slurry and coating on the negative electrode to obtain a composite negative electrode;
B) assembling the battery cell with the composite positive electrode and the composite negative electrode;
C) injecting an electrolyte solution into the battery cell, initiating the polymerization of monomers to form a multilayer electrolyte;
wherein the electrolyte solution comprises the first reactive component and optionally the second reactive component; and

The first preset component chemically reacts with the first reactive component in the electrolyte solution to generate an oxidation-resistant polymer; and the second preset component chemically reacts with the second reactive component in the electrolyte solution to generate a reduction-resistant polymer.

Preferably, the mass fraction of the first preset component in the positive electrode slurry is 0.01-35%; and the mass fraction of the second preset component in the negative electrode slurry is 0.01-35%.

Preferably, the mass fraction of the first reactive component in the electrolyte solution is 0.01-50%; and the mass fraction of the second reactive component in the electrolyte solution is 0.01-50%.

Preferably, the first preset component is the first monomer or the first initiator;

The first monomer comprises any one or more selected from the group consisting of: ester monomer, carbonate monomer, sulfone monomer, isocyanate monomer, amide monomer, nitrile monomer and fluorinated monomer;

The first initiator comprises any one or more selected from the group consisting of: azo initiator, peroxyl initiator, anionic or cationic initiator, organometallic compound, amine catalyst or organophosphorus initiator.

Preferably, the first monomer comprises any one or more selected from the group consisting of: vinyl acetate, dimethyl allyldicarboxylate, diethyl allylmalonate, methallyl carbonate, 1,4-butanediol diacrylate, 1,6-hexanediol diacrylate, methyl methacrylate, butyl methacrylate, vinylene carbonate, vinylethylene carbonate, methylvinyl sulfone, ethylvinyl sulfone, vinyl acetate, 1,4-butylene glycol diol, polycarbonate diol, polyethylene glycol adipate diol, ethoxylated trimethylolpropane triacrylate, pentaerythritol triacrylate, pentaerythritol tetraacrylate, dipentaerythritol pentaacrylate, dipentaerythritol hexaacrylate, acrylamide, N,N-methylene diacrylamide, N-methylmaleic amide, N-ethylmaleic amide, caprolactam, butyrolactam, maleic anhydride, acrylonitrile, ethyl 2-cyanoacrylate, butyl 2-cyano-2-acrylate, isooctyl 2-nitrile-3,3-diphenylacrylate, 1-cyclohexene acetonitrile, hexafluorobutyl methacrylate, trifluoroethyl methacrylate, dihydroxyethyl terephthalate, toluene diisocyanate, diphenylmethane diisocyanate, isophorone diisocyanate, hexamethylene diisocyanate, and hexamethylene diisocyanate.

Preferably, the first initiator comprises any one or more selected from the group consisting of: azodiisobutyronitrile, azobis-isoheptanenitrile, azobisisobutyric acid dimethyl ester, benzoyl peroxide, tert-butyl benzoylperoxide, methylethyl ketone peroxide, stannous octoate, lithium acetate, triethyl phosphorus, triphenyl phosphorus, tri-n-butyl phosphorus, tributyl tin oxide, tetrabutyl titanate, tetrabutyl zirconate, trialkyl tin alkoxide, dialkyl tin oxide, N-methylethylenediamine, dimethylformamide, triethyleneethylenediamine, methyldiethylene glycol amine, triethylenediamine, aluminum trifluoromethanesulfonate, magnesium trifluoromethanesulfonate, lithium bisfluorosulfonimide, and tin trifluoromethanesulfonate.

Preferably, the second preset component is the second monomer or the second initiator;

The second monomer comprises any one or more selected from the group consisting of: ether compound, ether segment-containing oligomer and siloxane;

The second initiator comprises any one or more selected from the group consisting of: azo initiator, peroxyl initiator, anionic or cationic initiator, organometallic compound initiator, amine catalyst initiator or organophosphorus initiator.

Preferably, the second monomer comprises any one or more selected from the group consisting of: polyethylene glycol dimethacrylate, polyethylene glycol diacrylate, ethoxyethoxyethyl acrylate, polyethylene glycol, 1,3-dioxolame, dioxane, hydroxypolyether silicone oil, polytetrahydrofuran ether glycol, vinylmethoxysilane, ethyl 2-(trimethylsiloxy)methacrylate, trivinylcyclotrisiloxane, tris(2-methoxyethoxy)vinylsilane, octahydroxypropyldimethylsilyl-POSS, polyetheramine, and trihydroxymethylpropane triglycidyl ether.

Preferably, the second initiator comprises any one or more selected from the group consisting of: azodiisobutyronitrile, azobisisoheptanenitrile, azobisisobutyric acid dimethyl ester, benzoyl peroxide, tert-butyl benzoylperoxide, methylethyl ketone peroxide, stannous octoate, lithium acetate, triethyl phosphorus, triphenyl phosphorus, tri-n-butyl phosphorus, tributyl tin oxide, tetrabutyl titanate, tetrabutyl zirconate, trialkyl tin alkoxide, dialkyl tin oxide, N-methylethylenediamine, dimethylformamide, triethyleneethylenediamine, methyldiethylene glycol amine, triethylenediamine, aluminum trifluoromethanesulfonate, magnesium trifluoromethanesulfonate, lithium bisfluorosulfonimide, and tin trifluoromethanesulfonate.

The present application provides a preparation method of an in-situ polymerized solid-state battery with a multilayer electrolyte as described above, wherein the method comprises the following steps:
A) mixing the first preset component with the positive electrode slurry and coating to obtain a composite positive electrode; mixing the second preset component with the negative electrode slurry and coating to obtain a composite negative electrode;
B) assembling a battery cell with the composite positive electrode and composite negative electrode;
C) injecting an electrolyte solution into the battery cell to initiate the polymerization of monomers to form a multilayer electrolyte;
wherein the electrolyte solution comprises the first reactive component and optionally the second reactive component; and
the first preset component chemically reacts with the first reactive component in the electrolyte solution to generate an oxidation-resistant polymer; and the second preset component chemically reacts with the second reactive component in the electrolyte solution to generate a reduction-resistant polymer.

Preferably, in step C) the polymerization is initiated by heating; the heating temperature is 25-90°C; and the heating time lasts 1-120 hours.

The present application provides an in-situ polymerized solid-state battery with a multilayer electrolyte, wherein the multilayer electrolyte comprises an oxidation-resistant polymer layer formed in-situ on the positive electrode and a reduction-resistant polymer layer formed in-situ on the negative electrode. Particularly, the preparation method of the battery comprises the following steps: A) mixing the first preset component with the positive electrode slurry and coating to obtain a composite positive electrode; mixing the second preset component with the negative electrode slurry and coating to obtain a composite negative electrode; B) assembling a battery cell with the composite positive electrode and composite negative electrode; C) injecting an electrolyte solution into the battery cell to initiate the polymerization of monomers to form a multilayer electrolyte; wherein the electrolyte solution comprises the first reactive component and optionally the second reactive component; and the first preset component chemically reacts with the first reactive component in the electrolyte solution to generate an oxidation-resistant polymer; and the second preset component chemically reacts with the second reactive component in the electrolyte solution to generate a reduction-resistant polymer.

The method of the present application to form the multilayer electrolyte in-situ inside the battery is carried out as follows: a monomer or initiator that can form oxidation-resistant polymer through chemical reaction is preset on the positive electrode during the preparation of positive electrodes, and a monomer or initiator that can form reduction-resistant polymer through chemical reaction is preset on the negative electrode during preparation of negative electrodes. Then a monomer that reacts with the preset monomer or initiator is injected into the battery by liquid injection to initiate a polymerization reaction, and achieve in-situ polymerization inside the battery to form a multilayer electrolyte with an oxidation-resistant positive electrode and a reduction-resistant negative electrode, which improves the safety and cycle stability of the in-situ polymerized battery. The in-situ polymerization method is adopted to reduce the interface impedance between the electrolyte and the electrode in the battery; and this method is simple and easy to expand production.

### BRIEF DESCRIPTION OF THE DRAWINGS

In order to explain the examples of the present application or the technical solutions in the prior art more clearly, the accompanying drawings that need to be used in the description of the examples or the prior art will be briefly described below. Obviously, the accompanying drawings described below are only used as examples of the present application, for a person skilled in the art other drawings can also be obtained on the basis of the provided drawings without creative work.
Fig. 1 shows a comparison of the cycle performance between the batteries in Example 1, Comparative Example 6 and Comparative Example 7 of the present application;
Fig. 2 shows a comparison of the cycle performance between the batteries in Example 3, Comparative Example 8 and Comparative Example 9 of the present application;
Fig. 3 shows a comparison of the cycle performance between the batteries in Example 4, Comparative Example 10 and Comparative Example 11 of the present application.

### DETAILED DESCRIPTION OF THE APPLICATION

The application provides an in-situ polymerized solid-state battery with a multilayer electrolyte, wherein the multilayer electrolyte comprises an oxidation-resistant polymer layer formed in-situ on the positive electrode and a reduction-resistant polymer layer formed in-situ on the negative electrode;
the in-situ polymerized solid-state battery with a multilayer electrolyte is prepared according to the following steps:
   A) mixing the first preset component with the positive electrode slurry and coating to obtain a composite positive electrode; mixing the second preset component with the negative electrode slurry and coating to obtain a composite negative electrode;
   B) assembling a battery cell with the composite positive electrode and composite negative electrode;
   C) injecting an electrolyte solution into the battery cell to initiate the polymerization of monomers to form a multilayer electrolyte;
wherein the electrolyte solution comprises the first reactive component and optionally the second reactive component; and
the first preset component chemically reacts with the first reactive component in the electrolyte solution to generate an oxidation-resistant polymer; and the second preset component chemically reacts with the second reactive component in the electrolyte solution to generate a reduction-resistant polymer.

In the present application, the first preset component is mixed with a positive electrode slurry to obtain a composite positive electrode slurry, the composite positive electrode slurry is coated on a current collector, and a composite positive electrode was obtained after drying.

In the present application, the first preset component chemically reacts with the first reactive component in the electrolyte solution to generate an oxidation-resistant polymer; and the first preset component may be the first monomer or the first initiator.

In the present application, the first monomer preferably comprises any one or more selected from the group consisting of: ester monomer, carbonate monomer, sulfone monomer, isocyanate monomer, amide monomer, nitrile monomer and fluorinated monomer; more preferably is any one or more selected from the group consisting of: vinyl acetate, dimethyl allyldicarboxylate, diethyl allylmalonate, methallyl carbonate, 1,4-butanediol diacrylate, 1,6-hexanediol diacrylate, methyl methacrylate, butyl methacrylate, vinylene carbonate, vinylethylene carbonate, methylvinyl sulfone, ethylvinyl sulfone, vinyl acetate, 1,4-butylene glycol diol, polycarbonate diol, polyethylene glycol adipate diol, ethoxylated trimethylolpropane triacrylate, pentaerythritol triacrylate, pentaerythritol tetraacrylate, dipentaerythritol pentaacrylate, dipentaerythritol hexaacrylate, acrylamide, N,N-methylene diacrylamide, N-methylmaleic amide, N-ethylmaleic amide, caprolactam, butyrolactam, maleic anhydride, acrylonitrile, ethyl 2-cyanoacrylate, butyl 2-cyano-2-acrylate, isooctyl 2-nitrile-3,3-diphenylacrylate, 1-cyclohexene acetonitrile, hexafluorobutyl methacrylate, trifluoroethyl methacrylate, dihydroxyethyl terephthalate, toluene diisocyanate, diphenylmethane diisocyanate, isophorone diisocyanate, hexamethylene diisocyanate, and hexamethylene diisocyanate.

In the present application, the first monomer may be selected from some oligomers, e.g., polycarbonate diol, polyethylene glycol adipate diol, as long as the oligomer can realize the polymerization reaction to form the oxidation-resistant polymer. For example, in certain embodiments of the present application, the oligomer as the first monomer may comprise polycarbonate diol (PCDL) having a molecular weight of 2000.

In the present application, the first initiator is preferably comprises any one or more selected from the group consisting of: azo initiator, peroxyl initiator, anionic or cationic initiator, organometallic compound initiator, amine catalyst initiator and organophosphorus initiator; more preferably is any one or more selected from the group consisting of: azodiisobutyronitrile, azobisisoheptanenitrile, azobisisobutyric acid dimethyl ester, benzoyl peroxide, tert-butyl benzoylperoxide, methylethyl ketone peroxide, stannous octoate, lithium acetate, triethyl phosphorus, triphenyl phosphorus, tri-n-butyl phosphorus, tributyl tin oxide, tetrabutyl titanate, tetrabutyl zirconate, trialkyl tin alkoxide, dialkyl tin oxide, N-methylethylenediamine, dimethylformamide, triethyleneethylenediamine, methyldiethylene glycol amine, triethylenediamine, aluminum trifluoromethanesulfonate, magnesium trifluoromethanesulfonate, lithium bisfluorosulfonimide, and tin trifluoromethanesulfonate.

In the present application, the mass fraction of the first preset component in the positive electrode slurry is 0.01-35%; preferably 0.1-35%, more preferably 1-30%, e.g., 0.01%, 0.1%, 0.5% %, 1%, 2%, 3%, 4%, 5%, 6%, 7%, 8%, 9%, 10%, 11%, 12%, 13%, 4%, 15%, 16%, 17%, 18%, 19%, 20%, 21%, 22%, 23%, 24%, 25%, 26%, 27%, 28%, 29%, 30%, 31%, 32%, 33%, 34%, and 35%; preferably a range value with any of the above-mentioned numerical values as the upper or lower limit.

In the present application, the positive electrode slurry comprises: a positive electrode material, a conductive agent, a binder and a solvent, wherein the mass ratio of the positive electrode material, the conductive agent and the binder is (5-10):(0.5-2): (0.5-2), more preferably 9:0.5:0.5; the solid content of the slurry is 45-60%, more preferably 50-55%; preferably the positive electrode material is any one or more selected from the group consisting of: lithium cobalt oxide, lithium nickel cobalt oxide, lithium manganate, lithium nickel manganate, lithium ternary nickel-cobalt manganate, lithium nickel-cobalt aluminate, lithium nickel-cobalt-manganese aluminate, lithium manganese-iron phosphate, lithium iron phosphate, sulfur, and lithium sulfide; preferably the conductive agent is conductive carbon black, Ketjen black, or carbon nanotubes, etc.; preferably the binder is polyvinylidene fluoride; and preferably the solvent is N-methylpyrrolidone.

In the present application, the positive electrode current collector may be a current collector commonly used in the art, e.g., an aluminum foil current collector.

In the present application, the drying temperature is preferably 80-110°C, more preferably 85-105°C, e.g., 80°C, 85°C, 90°C, 95°C, 100°C, 105°C or 110°C, preferably a range value with any of the above-mentioned numerical values as the upper or lower limit; the drying time period is preferably 0.1-5 hours, more preferably 0.5-4.5 hours, e.g., 0.1 hour, 0.5 hour, 1 hour, 1.5 hours, 2 hours, 2.5 hours, 3 hours, 3.5 hours, 4 hours, 4.5 hours or 5 hours, preferably a range value with any of the above-mentioned numerical values as the upper or lower limit.

In the present application, the second preset component is mixed with the negative electrode slurry to obtain the composite negative electrode slurry, and the composite negative electrode slurry is coated on the current collector to obtain the composite negative electrode after drying.

In the present application, the second preset component chemically reacts with the second reactive component in the electrolyte solution to generate a reduction-resistant polymer; the second preset component may be the second monomer or the second initiator.

In the present application, the second monomer preferably is any one or more selected from the group consisting of: ether compound, ether segment-containing oligomer and siloxane; more preferably is any one or more selected from the group consisting of: polyethylene glycol dimethacrylate, polyethylene glycol diacrylate, ethoxyethoxyethyl acrylate, polyethylene glycol, 1,3-dioxolame, dioxane, hydroxypolyether silicone oil, polytetrahydrofuran ether glycol, vinylmethoxysilane, ethyl 2-(trimethylsiloxy)methacrylate, trivinylcyclotrisiloxane, tris(2-methoxyethoxy)vinylsilane, octahydroxypropyldimethylsilyl-POSS, polyetheramine, and trihydroxymethylpropane triglycidyl ether.

In the present application, the second monomer may be selected from some oligomers, e.g., polyethylene glycol dimethacrylate, polyethylene glycol diacrylate, polyethylene glycol, polytetrahydrofuran ether diol, polyetheramine, as long as the oligomer can realize the polymerization reaction to form the oxidation-resistant polymer. For example, in certain embodiments of the present application, the oligomer as the second monomer may comprise polyethylene glycol (PEG) having a molecular weight of 10,000.

The second initiator is preferably any one or more selected from the group consisting of: azo initiator, peroxyl initiator, anionic or cationic initiator, organometallic compound initiator, amine catalyst initiator and organophosphorus initiator; more preferably is any one or more selected from the group consisting of: azodiisobutyronitrile, azobisisoheptanenitrile, azobisisobutyric acid dimethyl ester, benzoyl peroxide, tert-butyl benzoylperoxide, methylethyl ketone peroxide, stannous octoate, lithium acetate, triethyl phosphorus, triphenyl phosphorus, tri-n-butyl phosphorus, tributyl tin oxide, tetrabutyl titanate, tetrabutyl zirconate, trialkyl tin alkoxide, dialkyl tin oxide, N-methylethylenediamine, dimethylformamide, triethyleneethylenediamine, methyldiethylene glycol amine, triethylenediamine, aluminum trifluoromethanesulfonate, magnesium trifluoromethanesulfonate, lithium bisfluorosulfonimide, and tin trifluoromethanesulfonate.

In the present application, the mass fraction of the second preset component in the negative electrode slurry is 0.01-35%, preferably 0.1-35%, more preferably 1-30%, e.g., 0.01%, 0.1%, 0.5% %, 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, or 35%, preferably a range value with any of the above-mentioned numerical values as the upper or lower limit.

In the present application, the negative electrode slurry comprises a negative electrode material, a conductive agent, a binder, and a solvent; the mass ratio of the negative electrode material, the conductive agent and the binder is (5-10):(0.5-2): 1, more preferably 8:1:1; the solid content of the slurry is 45-60%, more preferably 50-60%; the negative electrode material is preferably any one or more selected from the group consisting of: metal lithium, metal lithium alloy, graphite, hard carbon, molybdenum disulfide, lithium titanate, graphene, silicon, silicon carbide, silicon oxide, silicon oxide carbon negative electrode; the conductive agent is preferably conductive carbon black, Ketjen black, or carbon nanotubes; the bonder is preferably styrene-butadiene rubber, sodium carboxymethyl cellulose, or lithium polymethacrylate; and the solvent is preferably water or N-methylpyrrolidone.

In the present application, the negative electrode current collector may be a current collector commonly used in the art, e.g., a copper foil current collector.

In the present application, the drying temperature is preferably 85-100°C, more preferably 90-95°C; the drying time period is preferably 0.5-2 hours, more preferably 1-1.5 hours.

After obtaining the composite positive electrode and the composite negative electrode, in the present application, the composite positive electrode and the composite negative electrode are assembled into a battery cell, and then the electrolyte solution containing the first reactive component and optionally the second reactive component is/are injected into the battery cell to initiate polymerization under certain conditions to form a multilayer electrolyte.

In the present application, the first preset component can chemically react with the first reactive component in the electrolyte solution to generate an oxidation-resistant polymer. For example, the first preset component is the first monomer, and the first reactive component is a monomer that can undergo a copolymerization reaction with the first preset component. Or the first reactive component is the first initiator, that initiates the polymerization of the first preset component. Or the first reactive component contains both the first monomer and the first initiator. Or the first preset component is the first initiator, and the first reactive component is a monomer that can initiate polymerization to form an oxidation-resistant polymer.

Similarly, the second preset component can chemically react with the second reactive component in the electrolyte solution to generate a reduction-resistant polymer. For example, the second preset component is the second monomer, and the second reactive component is a monomer that can undergo a copolymerization reaction with the second preset component. Or the second preset component is the second initiator, that initiates the polymerization of the second preset component. Or the second reactive component contains both the second monomer and the second initiator. Or the second preset component is the second initiator, and the second reactive component is a monomer that can initiate polymerization to form a reduction-resistant polymer.

In the present application, the amounts of the first reactive component and optionally the second reactive component are related to the amounts of the first preset component and the second preset component; and based on the amounts of the first preset component and the second preset component Those skilled in the art may select and adjust the amounts of the first reactive component and optionally the second reactive component, so as to make them react completely. Preferably, in the present application, the mass fraction of the first reactive component in the electrolyte solution is 0.01-50%, preferably 0.1-50%, more preferably 1-40%, e.g., 0.01%, 0.1%, 0.5%, 1%, 2%, 5%, 10%, 15%, 20%, 25%, 30%, 35%, 40%, 45%, or 50%, preferably a range value with any of the above-mentioned numerical values as the upper or lower limit; the mass fraction of the second reactive component in the electrolyte solution is 0.01-50%, preferably 0.1-50%, more preferably 1-40%, e.g., 0.01%, 0.1%, 0.5%, 1 %, 2%, 5%, 10%, 15%, 20%, 25%, 30%, 35%, 40%, 45%, or 50%, preferably a range value with any of the above-mentioned numerical values as the upper or lower limit.

In the present application, the electrolyte solution further comprises a solvent, and the solvent preferably comprises any one or more selected from the group consisting of: ethylene carbonate (EC), fluoroethylene carbonate (FEC), propylene carbonate (PC), dimethyl carbonate (DMC), diethyl carbonate (DEC), ethylmethyl carbonate (EMC), butylene carbonate, methylpropyl carbonate, methyl formate, ethyl formate, propyl formate, butyl formate, ethyl acetate, propyl acetate, butyl acetate, methyl propionate, ethyl propionate, butyl propionate, methyl butyrate, ethyl butyrate, propyl butyrate, ethylene glycol dimethyl ether (DME), tetraethylene glycol dimethyl ether, delta-valerolactone, tetrahydrofuran, 2-methyltetrahydrofuran, 4-methyl-1,3-dioxolane, 2-methyl-1,3-dioxolane, 1,3-dioxolane (DOL), sulfolane, and dimethyl sulfoxide.

The electrolyte solution further comprises lithium salts, and the lithium salts preferably comprise any one or more selected from the group consisting of:
lithium bis-trifluoromethanesulfonimide, lithium bis(oxalate) borate, lithium bis-fluorosulfonimide, lithium hexafluoroarsenate, lithium tetrafluoroborate, lithium perchlorate, and lithium hexafluorophosphate.

The present application also provides a preparation method of an in-situ polymerized solid-state battery with a multilayer electrolyte, wherein the method comprises the following steps:
A) mixing the first preset component with the positive electrode slurry and coating to obtain a composite positive electrode; mixing the second preset component with the negative electrode slurry and coating to obtain a composite negative electrode;
B) assembling a battery cell with the composite positive electrode and composite negative electrode;
C) injecting an electrolyte solution into the battery cell to initiate the polymerization of monomers to form a multilayer electrolyte;
wherein the electrolyte solution comprises the first reactive component and optionally the second reactive component; and
the first preset component chemically reacts with the first reactive component in the electrolyte solution to generate an oxidation-resistant type polymer; and the second preset component chemically reacts with the second reactive component in the electrolyte to generate a reduction-resistant type polymer.

In the present application, the types and amounts of the raw materials are consistent with the types and amounts of the above-mentioned raw materials, and these will not be repeated herein.

In the present application, the electrolyte solution is preferably heated to initiate polymerization. In the present application, the heating temperature is 25-90°C, preferably 25-80°C, more preferably 30-75°C, e.g., 25°C, 30°C, 35°C, 40°C, 45°C, 50°C, 55°C, 60°C, 65°C, 70°C, 75°C, 80°C, 85°C or 90°C, preferably a range value with any of the above-mentioned numerical values as the upper or lower limit; the heating time is 1-120 hours, preferably 4-120 hours, more preferably 10-100 hours, e.g., 1 hour, 2 hours, 3 hours, 4 hours, 10 hours, 15 hours, 20 hours, 25 hours, 30 hours, 35 hours, 40 hours, 45 hours, 50 hours, 55 hours, 60 hours, 65 hours, 70 hours, 75 hours, 80 hours, 85 hours, 90 hours, 95 hours, 100 hours, 105 hours, 110 Hours, 115 hours or 120 hours, preferably a range value with any of the above-mentioned numerical values as the upper or lower limit.

The solid-state battery with a multilayer electrolyte prepared according to the above preparation method of the present application has an oxidation-resistant polymer layer on the positive electrode and a reduction-resistant polymer layer on the negative electrode. The battery not only has good oxidation-resistant performance of the positive side and good reduction-resistant performance of the negative side, but also improves the interface contact between the electrode and the electrolyte, thereby improving the safety and cycle stability of the battery cell.

The present application provides an in-situ polymerized solid-state battery with a multilayer electrolyte, wherein the multilayer electrolyte comprises an oxidation-resistant polymer layer formed in-situ on the positive electrode, and a reduction-resistant polymer layer formed in-situ on the negative electrode.

Particularly the preparation method of the battery comprises the following steps: A) mixing the first preset component with the positive electrode slurry and coating to obtain a composite positive electrode; mixing the second preset component with the negative electrode slurry and coating to obtain a composite negative electrode; B) assembling a battery cell with the composite positive electrode and composite negative electrode; C) injecting an electrolyte solution into the battery cell to initiate the polymerization of monomers to form a multilayer electrolyte; wherein the electrolyte solution comprises the first reactive component and optionally the second reactive component; the first preset component chemically reacts with the first reactive component in the electrolyte solution to generate an oxidation-resistant polymer; and the second preset component chemically reacts with the second reactive component in the electrolyte to generate a reduction-resistant polymer. The method of the present application to form the multilayer electrolyte in-situ inside the battery is carried out as follows: a monomer or initiator that can form oxidation-resistant polymer through chemical reaction is preset on the positive electrode during the mixing process. Meanwhile a monomer or initiator that can form reduction-resistant polymer through chemical reaction is preset on the negative electrode during the mixing process. Then a monomer or initiator that reacts with the preset monomer or initiator is injected into the battery by liquid injection to initiate a polymerization reaction under certain conditions, and achieve in-situ polymerization inside the battery to form a solid-state battery having a multilayer electrolyte with an oxidation-resistant positive electrode and a reduction-resistant negative electrode, thereby improving the safety and cycle stability of the in-situ polymerized battery. The in-situ polymerization method is adopted to reduce the interface impedance between the electrolyte and the electrode in the battery. This method is simple and easy to expand mass-production.

In order to further illustrate the present application, an in-situ polymerized solid-state battery with a multilayer structure provided by the present application and its preparation method are described in detail below with reference to the Examples, but these should not be construed as a limitation on the protection scope of the present application.

### Example 1

(1) 0.5g of polycarbonate diol (PCDL) with a molecular weight of 2000 was mixed into 10g of positive electrode slurry to stir well, wherein the positive electrode slurry contains 50wt% of solvent N-methyl pyrrolidone, and the ratio of solid components is LiCo_{0.1}Ni_{0.8}Mn_{0.1}O₂: PVDF: conductive carbon black = 9:0.5:0.5; after coating and drying the blended positive electrode slurry, a positive electrode was obtained.
(2) 0.3 g of polyethylene glycol (PEG10000) with a molecular weight of 10000 was mixed into 10 g of negative electrode slurry to stir well, wherein the negative electrode slurry contains 50wt% of solvent N-methyl pyrrolidone, and the ratio of solid components is graphite: PVDF: conductive carbon black = 8:1:1; after coating and drying the blended negative electrode slurry, a negative electrode was obtained.
(3) 0.2 g of toluene diisocyanate (TDI) was dissolved in an electrolyte solution of 5g DME-1M LiTFSI to obtain a electrolyte solution.

The electrodes of steps (1) and (2), and the electrolyte solution of step (3) were assembled into a battery, and the assembled battery was placed in an oven at 80°C to cure for 24 hours to form a multilayered polymer electrolyte with PCDL+TDI on the positive electrode and PEG10000+TDI on the negative electrode.

### Example 2

(1) 0.5g of polycarbonate diol (PCDL) with a molecular weight of 2000 was mixed into 10g of positive electrode slurry to stir well, wherein the positive electrode slurry contains 50wt% of solvent N-methyl pyrrolidone, and the ratio of solid components is LiCo_{0.1}Ni_{0.8}Mn_{0.1}O₂: PVDF: conductive carbon black = 9:0.5:0.5; after coating and drying the blended positive electrode slurry, a positive electrode was obtained.
(2) 0.1 g of lithium bis-fluorosulfonimide (LiFSI) was mixed into 10 g of negative electrode slurry to stir well, wherein the negative electrode slurry contains 50wt% of solvent N-methyl pyrrolidone, and the ratio of solid components is graphite: PVDF: conductive carbon black = 8:1:1; after coating and drying the blended negative electrode slurry, a negative electrode was obtained.
(3) 0.2 g of toluene diisocyanate (TDI) was dissolved in an electrolyte solution of 5g DME/DOL=1/1 1M LiTFSI to obtain a electrolyte solution.

The electrodes of steps (1) and (2), and the electrolyte solution of step (3) were assembled into a battery, and the assembled battery was placed in an oven at 80°C to cure for 24 hours to form a multilayered polymer electrolyte with PCDL+TDI on the positive electrode and DOL polymer on the negative electrode.

### Example 3

(1) 0.5g of polycarbonate diol (PCDL) with a molecular weight of 2000 was mixed into 10g of positive electrode slurry to stir well, wherein the positive electrode slurry contains 50wt% of solvent N-methyl pyrrolidone, and the ratio of solid components is LiCo_{0.1}Ni_{0.8}Mn_{0.1}O₂: PVDF: conductive carbon black = 9:0.5:0.5; after coating and drying the blended positive electrode slurry, a positive electrode was obtained.
(2) 1 g of lithium bisfluorosulfonimide (LiFSI) was mixed into 10 g of negative electrode slurry to stir well, wherein the negative electrode slurry contains 50wt% of solvent N-methyl pyrrolidone, and the ratio of solid components is graphite: PVDF: conductive carbon black = 8:1:1; after coating and drying the blended negative electrode slurry, a negative electrode was obtained.
(3) 0.2 g of toluene diisocyanate (TDI) and 0.4 g of trimethylolpropane triglycidyl ether (TEGDE) were dissolved in an electrolyte solution of 5g DME-1M LiTFSI to obtain a electrolyte solution.

The electrodes of steps (1) and (2), and the electrolyte solution of step (3) were assembled into a battery, and the assembled battery was placed in an oven at 80°C to cure for 24 hours to form a multilayered polymer electrolyte with PCDL+TDI on the positive electrode and TEGDE polymer on the negative electrode.

### Example 4

(1) 0.2g of maleic anhydride (MA) was mixed into 10g of positive electrode slurry to stir well, wherein the positive electrode slurry contains 50wt% of solvent N-methylpyrrolidone, and the ratio of solid components is LiCo_{0.1}Ni_{0.8}Mn_{0.1}O₂: PVDF: conductive carbon black = 9:0.5:0.5; after coating and drying the blended positive electrode slurry, a positive electrode was obtained.
(2) 0.3 g of polyethylene glycol (PEG10000) with a molecular weight of 10000 was mixed into 10 g of negative electrode slurry to stir well, wherein the negative electrode slurry contains 50wt% of solvent N-methyl pyrrolidone, and the ratio of solid components is graphite: PVDF: conductive carbon black = 8:1:1; after coating and drying the blended negative electrode slurry, a negative electrode was obtained.
(3) 0.3 g of toluene diisocyanate (TDI), 0.2 g of methyl methacrylate (MMA) and 0.004 g of azodiisobutyronitrile (AIBN) were dissolved in an electrolyte solution of 5g DME-1M LiTFSI to obtain a electrolyte solution.

The electrodes of steps (1) and (2), and the electrolyte solution of step (3) were assembled into a battery, and the assembled battery was placed in an oven at 80°C to cure for 24 hours to form a multilayered polymer electrolyte with MA+MMA on the positive electrode and TDI+PEG10000 polymer on the negative electrode. The obtained battery was charged and discharged for 2 cycles with a 0.1C current, and then charged and discharged for 100 cycles with a 0.3C current.

### Example 5

(1) 0.5g of ethoxylated trimethylolpropane triacrylate (ETPTA) was mixed into 10g of positive electrode slurry to stir well, wherein the positive electrode slurry contains 50wt% of solvent N-methyl pyrrolidone, and the ratio of solid components is LiCo_{0.1}Ni_{0.8}Mn_{0.1}O₂: PVDF: conductive carbon black = 9:0.5:0.5; after coating and drying the blended positive electrode slurry, a positive electrode was obtained.
(2) 0.2 g of lithium bisfluorosulfonimide (LiFSI) was mixed into 10 g of negative electrode slurry to stir well, wherein the negative electrode slurry contains 50wt% of solvent N-methyl pyrrolidone, and the ratio of solid components is graphite: PVDF: conductive carbon black = 8:1:1; after coating and drying the blended negative electrode slurry, a negative electrode was obtained.
(3) 0.5 g of trimethylolpropane triglycidyl ether (TEGDE), 0.4 g of polyethylene glycol dimethacrylate (PEGDMA) and 0.005 g of azodiisobutyronitrile (AIBN) were dissolved in an electrolyte solution of 5g DME-1M LiTFSI to obtain a electrolyte solution.

The electrodes of steps (1) and (2), and the electrolyte solution of step (3) were assembled into a battery, and the assembled battery was placed in an oven at 80°C to cure for 24 hours to form a multilayered polymer electrolyte with ETPTA+PEGDMA on the positive electrode and TEGDE polymer on the negative electrode. The obtained battery was charged and discharged for 2 cycles with a 0.1C current, and then charged and discharged for 100 cycles with a 0.3C current.

### Comparative Example 1

(1) The positive electrode slurry contains 50wt% of solvent N-methyl pyrrolidone, and the ratio of solid components is LiCo_{0.1}Ni_{0.8}Mn_{0.1}O₂: PVDF: conductive carbon black = 9:0.5:0.5; after coating and drying the positive electrode slurry, a positive electrode was obtained.
(2) The negative electrode slurry contains 50wt% of solvent N-methyl pyrrolidone, and the ratio of solid components is graphite: PVDF: conductive carbon black = 8:1:1; after coating and drying the negative electrode slurry, a positive electrode was obtained.
(3) 0.3 g of polycarbonate diol (PCDL) with a molecular weight of 2000, 0.2 g of polyethylene glycol (PEG10000) with a molecular weight of 10,000, and 0.1 g of toluene diisocyanate (TDI) were dissolved in an electrolyte solution of 5g DME-1M LiTFSI to obtain a electrolyte solution.

The electrodes of steps (1) and (2), and the electrolyte solution of step (3) were assembled into a battery, and the assembled battery was placed in an oven at 80°C to cure for 24 hours to obtain a solid-state battery. The obtained battery was charged and discharged for 2 cycles with a 0.1C current, and then charged and discharged for 100 cycles with a 0.3C current.

### Comparative Example 2

(1) The positive electrode slurry contains 50wt% of solvent N-methyl pyrrolidone, and the ratio of solid components is LiCo_{0.1}Ni_{0.8}Mn_{0.1}O₂: PVDF: conductive carbon black = 9:0.5:0.5; after coating and drying the positive electrode slurry, a positive electrode was obtained.
(2) The negative electrode slurry contains 50wt% of solvent N-methyl pyrrolidone, and the ratio of solid components is graphite: PVDF: conductive carbon black = 8:1:1; after coating and drying the negative electrode slurry, a negative electrode was obtained.
(3) 0.3 g of polycarbonate diol (PCDL) with a molecular weight of 2000, 0.2g of lithium bisfluorosulfonimide (LiFSI), and 0.1g of toluene diisocyanate (TDI) were dissolved in an electrolyte solution of 5g DME/DOL=1/1 1M LiTFSI to obtain a electrolyte solution.

The electrodes of steps (1) and (2), and the electrolyte solution of step (3) were assembled into a battery, and the assembled battery was placed in an oven at 80°C to cure for 24 hours to obtain a solid-state battery. The obtained battery was charged and discharged for 2 cycles with a 0.1C current, and then charged and discharged for 100 cycles with a 0.3C current.

### Comparative Example 3

(1) The positive electrode slurry contains 50wt% of solvent N-methyl pyrrolidone, and the ratio of solid components is LiCo_{0.1}Ni_{0.8}Mn_{0.1}O₂: PVDF: conductive carbon black = 9:0.5:0.5; after coating and drying the positive electrode slurry, a positive electrode was obtained.
(2) The negative electrode slurry contains 50wt% of solvent N-methyl pyrrolidone, and the ratio of solid components is graphite: PVDF: conductive carbon black = 8:1:1; after coating and drying the negative electrode slurry, a negative electrode was obtained.
(3) 0.3 g of polycarbonate diol (PCDL) with a molecular weight of 2000, 0.2g of lithium bisfluorosulfonimide (LiFSI), 0.1g of toluene diisocyanate (TDI), and 0.2g of trimethylolpropane triglycidyl ether (TEGDE) were dissolved in an electrolyte solution of 5g DME 1M LiTFSI to obtain a electrolyte solution.

The electrodes of steps (1) and (2), and the electrolyte solution of step (3) were assembled into a battery, and the assembled battery was placed in an oven at 80°C to cure for 24 hours to obtain a solid-state battery. The obtained battery was charged and discharged for 2 cycles with a 0.1C current, and then charged and discharged for 100 cycles with a 0.3C current.

### Comparative Example 4

(1) The positive electrode slurry contains 50wt% of solvent N-methylpyrrolidone, and the ratio of solid components is LiCo_{0.1}Ni_{0.8}Mn_{0.1}O₂: PVDF: conductive carbon black = 9:0.5:0.5; after coating and drying the positive electrode slurry, a positive electrode was obtained.
(2) The negative electrode slurry contains 50wt% of solvent N-methylpyrrolidone, and the ratio of solid components is graphite: PVDF: conductive carbon black = 8:1:1; after coating and drying the negative electrode slurry, a negative electrode was obtained.
(3) 0.3 g of maleic anhydride (MA), 0.2g of polyethylene glycol (PEG10000) with a molecular weight of 10000, 0.1g of toluene diisocyanate (TDI), 0.2g of methyl methacrylate (MMA), and 0.002g of azodiisobutyronitrile (AIBN) were dissolved in an electrolyte solution of 5g DME 1M LiTFSI to obtain a electrolyte solution.

The electrodes of steps (1) and (2), and the electrolyte solution of step (3) were assembled into a battery, and the assembled battery was placed in an oven at 80°C to cure for 24 hours to obtain a solid-state battery. The obtained battery was charged and discharged for 2 cycles with a 0.1C current, and then charged and discharged for 100 cycles with a 0.3C current.

### Comparative Example 5

(1) The positive electrode slurry contains 50wt% of solvent N-methylpyrrolidone, and the ratio of solid components is LiCo_{0.1}Ni_{0.8}Mn_{0.1}O₂: PVDF: conductive carbon black = 9:0.5:0.5; after coating and drying the positive electrode slurry, a positive electrode was obtained.
(2) The negative electrode slurry contains 50wt% of solvent N-methylpyrrolidone, and the ratio of solid components is graphite: PVDF: conductive carbon black = 8:1:1; after coating and drying the negative electrode slurry, a negative electrode was obtained.
(3) 0.5 g of ethoxylated trimethylolpropane triacrylate (ETPTA), 0.5 g of trimethylolpropane triglycidyl ether (TEGDE), 0.4 g of polyethylene glycol dimethacrylate (PEGDMA) ), and 0.005g of azodiisobutyronitrile (AIBN) were dissolved in an electrolyte solution of 5g DME 1M LiTFSI to obtain a electrolyte solution.

The electrodes of steps (1) and (2), and the electrolyte solution of step (3) were assembled into a battery, and the assembled battery was placed in an oven at 80°C to cure for 24 hours to obtain a solid-state battery. The obtained battery was charged and discharged for 2 cycles with a 0.1C current, and then charged and discharged for 100 cycles with a 0.3C current.

### Comparative Example 6

(1) The positive electrode slurry contains 50wt% of solvent N-methylpyrrolidone, and the ratio of solid components is LiCo_{0.1}Ni_{0.8}Mn_{0.1}O₂: PVDF: conductive carbon black = 9:0.5:0.5; after coating and drying the positive electrode slurry, a positive electrode was obtained.
(2) The negative electrode slurry contains 50wt% of solvent N-methylpyrrolidone, and the ratio of solid components is graphite: PVDF: conductive carbon black = 8:1:1; after coating and drying the negative electrode slurry, a negative electrode was obtained.
(3) 0.5 g of polycarbonate diol (PCDL) with a molecular weight of 2000 and 0.1 g of toluene diisocyanate (TDI) were dissolved in 5 g of DME 1MLiTFSI to prepare a positive electrode coating solution; 0.3 g of polyethylene glycol (PEG10000) with a molecular weight of 10,000 and 0.1 g of toluene diisocyanate (TDI) were dissolved in 5 g of DME 1MLiTFSI to prepare a negative electrode coating solution.
(4) The coating solution obtained in step (3) was respectively applied to the surfaces of the positive and negative electrodes with a 50um scraper, then drying at 80°C for 24 hours to obtain a composite positive electrode and a composite negative electrode;

The composite electrodes of steps (3) and(4) were cut into positive or negative electrodes respectively of the battery to assemble into a battery, then standing at 80° C for 5 hours to obtain a solid-state battery. The obtained battery was charged and discharged for 2 cycles with a 0.1C current, and then charged and discharged for 100 cycles with a 0.3C current.

### Comparative Example 7

(1) 0.5g of polycarbonate diol (PCDL) with a molecular weight of 2000 and 0.1 g of toluene diisocyanate (TDI) were mixed into a positive electrode slurry, wherein the positive electrode slurry contains 50wt% of solvent N-methylpyrrolidone, and the ratio of solid components is LiCo_{0.1}Ni_{0.8}Mn_{0.1}O₂: PVDF: conductive carbon black = 9:0.5:0.5; after coating and drying the blended positive electrode slurry, a positive electrode was obtained.
(2) 0.3 g of polyethylene glycol (PEG10000) with a molecular weight of 10000 and 0.1 g toluene diisocyanate (TDI) were mixed into a negative electrode slurry, wherein the negative electrode slurry contains 50wt% of solvent N-methylpyrrolidone, and the ratio of solid components is graphite: PVDF: conductive carbon black = 8:1:1; after coating and drying the blended negative electrode slurry, a negative electrode was obtained.
(3) The composite electrodes of steps (1) and (2) were cut into positive and negative electrodes of the battery to assemble into a battery, then injecting an electrolyte solution with components of DME 1M LiTFSI, and infiltrating for 24 hours to obtain a battery.

The obtained battery was charged and discharged for 2 cycles with a 0.1C current, and then charged and discharged for 100 cycles with a 0.3C current.

### Comparative Example 8

(1) The positive electrode slurry contains 50wt% of solvent N-methylpyrrolidone, and the ratio of solid components is LiCo_{0.1}Ni_{0.8}Mn_{0.1}O₂: PVDF: conductive carbon black = 9:0.5:0.5; after coating and drying the positive electrode slurry, a positive electrode was obtained.
(2) The negative electrode slurry contains 50wt% of solvent N-methylpyrrolidone, and the ratio of solid components is graphite: PVDF: conductive carbon black = 8:1:1; after coating and drying the negative electrode slurry, a negative electrode was obtained.
(3) 0.5 g of polycarbonate diol (PCDL) with a molecular weight of 2000 and 0.2g of toluene diisocyanate (TDI) were dissolved in 5 g of DME 1MLiTFSI to prepare a positive electrode coating solution; 0.4 g of trimethylolpropane triglycidyl ether (TEGDE) and 1g of lithium bisfluorosulfonimide (LiFSI) were dissolved in 5 g of DME 1MLiTFSI to prepare a negative electrode coating solution.
(4) The coating solution obtained in step (3) was respectively applied to the surfaces of the positive and negative electrodes with a 50um scraper, then drying at 80°C for 24 hours to obtain a composite positive electrode and a composite negative electrode;

The composite electrodes of steps (3) and (4) were cut into positive and negative electrodes of the battery to assemble into a battery, then standing at 80° C for 5 hours to obtain a solid-state battery. The obtained battery was charged and discharged for 2 cycles with a 0.1C current, and then charged and discharged for 100 cycles with a 0.3C current.

### Comparative Example 9

(1) 0.5g of polycarbonate diol (PCDL) with a molecular weight of 2000 and 0.2 g of toluene diisocyanate (TDI) were mixed into a positive electrode slurry, wherein the positive electrode slurry contains 50wt% of solvent N-methylpyrrolidone, and the ratio of solid components is LiCo_{0.1}Ni_{0.8}Mn_{0.1}O₂: PVDF: conductive carbon black = 9:0.5:0.5; after coating and drying the blended positive electrode slurry, a positive electrode was obtained.
(2) 0.4 g of trimethylolpropane triglycidyl ether and 1 g of lithium bisfluorosulfonimide (LiFSI) were mixed into a negative electrode slurry, wherein the negative electrode slurry contains 50wt% of solvent N-methylpyrrolidone, and the ratio of solid components is graphite: PVDF: conductive carbon black = 8:1:1; after coating and drying the blended negative electrode slurry, a negative electrode was obtained.
(3) The composite electrodes of steps (1) and (2) were cut into positive and negative electrodes of the battery to assemble into a battery, then injecting an electrolyte solution with components of DME 1M LiTFSI, and infiltrating for 24 hours to obtain a battery.

The obtained battery was charged and discharged for 2 cycles with a 0.1C current, and then charged and discharged for 100 cycles with a 0.3C current.

### Comparative Example 10

(1) The positive electrode slurry contains 50wt% of solvent N-methylpyrrolidone, and the ratio of solid components is LiCo_{0.1}Ni_{0.8}Mn_{0.1}O₂: PVDF: conductive carbon black = 9:0.5:0.5; after coating and drying the positive electrode slurry, a positive electrode was obtained.
(2) The negative electrode slurry contains 50wt% of solvent N-methylpyrrolidone, and the ratio of solid components is graphite: PVDF: conductive carbon black = 8:1:1; after coating and drying the negative electrode slurry, a negative electrode was obtained.
(3) 0.2 g of maleic anhydride (MA), 0.2 g of methyl methacrylate (MMA), and 0.004 g of azodiisobutyronitrile (AIBN) were dissolved in 5 g of DME 1MLiTFSI to prepare a positive electrode coating solution; 0.3 g of polyethylene glycol (PEG10000) with a molecular weight of 10,000 and 0.3 g of toluene diisocyanate (TDI) were dissolved in 5 g of DME 1MLiTFSI to prepare a negative electrode coating solution.
(4) The coating solution obtained in step (3) was respectively applied to the surfaces of the positive and negative electrodes with a 50um scraper, then drying at 80°C for 24 hours to obtain a composite positive electrode and a composite negative electrode;

The composite electrodes of steps (3) and (4) were cut into positive and negative electrodes of the battery to assemble into a battery, then standing at 80° C for 5 hours to obtain a solid-state battery. The obtained battery was charged and discharged for 2 cycles with a 0.1C current, and then charged and discharged for 100 cycles with a 0.3C current.

### Comparative Example 11

(1) 0.2g of maleic anhydride (MA), 0.2g of methyl methacrylate (MMA), 0.004g of azodiisobutyronitrile (AIBN) were mixed into a positive electrode slurry, wherein the positive electrode slurry contains 50wt% of solvent N-methylpyrrolidone, and the ratio of solid components is LiCo_{0.1}Ni_{0.8}Mn_{0.1}O₂: PVDF: conductive carbon black = 9:0.5:0.5; after coating and drying the blended positive electrode slurry, a positive electrode was obtained.
(2) 0.3 g of polyethylene glycol (PEG10000) with a molecular weight of 10000 and 0.3 g of toluene diisocyanate (TDI) were mixed into a negative electrode slurry, wherein the negative electrode slurry contains 50wt% of solvent N-methylpyrrolidone, and the ratio of solid components is graphite: PVDF: conductive carbon black = 8:1:1; after coating and drying the blended negative electrode slurry, a negative electrode was obtained.
(3) The composite electrodes of steps (1) and (2) were cut into positive and negative electrodes of the battery to assemble into a battery, then injecting an electrolyte solution with components of DME 1M LiTFSI, and infiltrating for 24 hours to obtain a battery.

The obtained battery was charged and discharged for 2 cycles with a 0.1C current, and then charged and discharged for 100 cycles with a 0.3C current.

The test results of above Examples and Comparative Examples are shown in Tables 1-2.

**Table 1: The test results of battery performance in the Examples**

| Example No. | Material for mixing into positive electrode slurry | Material for mixing into negative electrode slurry | Material for mixing into electrolyte solution | Capacity performance | Capacity retention rate after 100 cycles (%) |
|---|---|---|---|---|---|
| 1 | PCDL | PEG10000 | TDI | 0.1C 190.1mAh/g; 0.3C 169.8 mAh/g | 94.44 |
| 2 | PCDL | LiFSI | TDI\DOL | 0.1C 187.4 mAh/g; 0.3C 168.4 mAh/g | 95.83 |
| 3 | PCDL | LiFSI | TDI\TEGDE | 0.1C 184 mAh/g; 0.3C 162.4 mAh/g | 98.73 |
| 4 | MA | PEG10000 | TDI\MMA AIBN | 0.1C 188.2 mAh/g; 0.3C 169.1 mAh/g | 95.27 |
| 5 | ETPTA | LiFSI | PEGDMA\TEGDE AIBN | 0.1C 188.2 mAh/g; 0.3C 169.1 mAh/g | 99.24 |

**Table 2: The test results of battery performance in the Comparative Examples**

| Comparative Example No. | Electrolyte solution | Capacity performance | Capacity retention rate after 100 cycles (%) |
|---|---|---|---|
| 1 | PEG10000+PCDL+TDI | 0.1C 189.8 mAh/g; 0.3C 169.9 mAh/g | 86.13 |
| 2 | PCDL +TDI+LiFSI+DOL; | 0.1C 182.7 mAh/g; 0.3C 165 mAh/g | 82.05 |
| 3 | PCDL +TDI+LiFSI+TEGDE | 0.1C 185.4 mAh/g; 0.3C 166.5 mAh/g | 87.42 |
| 4 | MA+PEG10000+TDI+MMA+AIBN | 0.1C 185.3 mAh/g; 0.3C 165.7 mAh/g | 87.49 |
| 5 | ETPTA+TEGDE+ PEGDMA + AIBN +LiFSI | 0.1C 189 mAh/g; 0.3C 169.4 mAh/g | 78.63 |
| 6 | PCDL+TDI were coated onto a positive electrode, PEG10000+TDI | 0.1C 183.9 mAh/g; | 58.74 |
| | were coated onto a negative electrode, then the positive and negative electrodes were fit together by hot-pressing. | 0.3C 159.7 mAh/g | |
| 7 | PCDL+TDI were mixed into a positive electrode slurry to dry and cure after coating, PEG10000+TDI were mixed into a negative electrode slurry to dry and cure after coating, then assembling a battery cell and injecting the electrolyte solution. | 0.1C 189.9 mAh/g; 0.3C 170.2mAh/g | 78.34 |
| 8 | PCDL+TDI were coated onto a positive electrode, TEGDE+LiFSI were coated onto a negative electrode, then the positive and negative electrodes were fit together by hot-pressing. | 0.1C 173 mAh/g; 0.3C 148.2 mAh/g | 84.17 |
| 9 | PCDL+TDI were mixed into a positive electrode slurry to dry and cure after coating, TEGDE+LiFSI were mixed into a negative electrode slurry to dry and cure after coating, then assembling a battery cell and injecting the electrolyte solution. | 0.1C 191 mAh/g; 0.3C 171.8 mAh/g | 84.51 |
| 10 | MA+MMA+AIBN were coated onto a positive electrode, PEG10000+TDI were coated onto a negative electrode, then the positive and negative electrodes were fit together by hot-pressing. | 0.1C 76.4 mAh/g; 0.3C 65.6 mAh/g | 30.51 |
| 11 | MA+MMA+ AIBN were mixed into a positive electrode slurry to dry and cure after coating, PEG10000+TDI were mixed into a negative electrode slurry to dry and cure after coating, then assembling a battery cell and injecting the electrolyte solution. | 0.1C 188.8 mAh/g; 0.3C 169.5 mAh/g | 54.37 |

It can be seen from the comparison of Examples 1-5 that, the in-situ multilayer electrolyte prepared with the cross-linked monomer has better cycle stability than the non-cross-linked structure.

According to the battery cycle data of Examples 1-5 and Comparative Examples 1-5, the battery prepared by in-situ curing multilayer structure obviously has better cycle performance than the battery prepared by the traditional in-situ polymerization method.

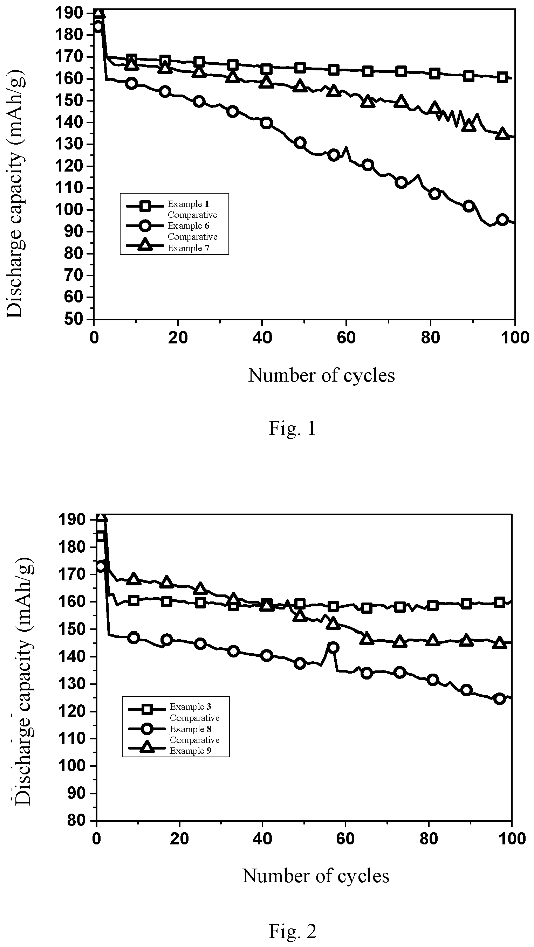

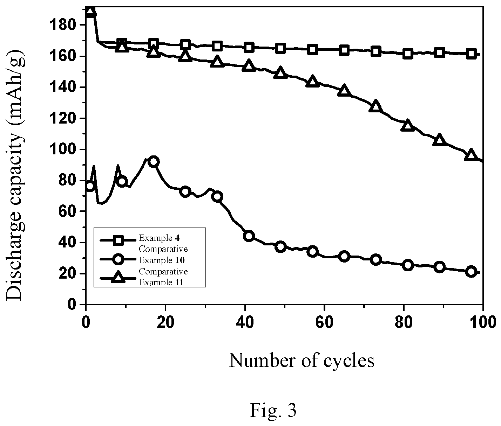

Through comparison of the above three groups of data: Example 1, Comparative Example 6, Comparative Example 7 (Fig. 1); Example 3, Comparative Example 8, Comparative Example 9 (Fig. 2); and Example 4, Comparative Example 10, Comparative Example 11 (Fig. 3), it can be seen that the battery with in-situ multilayer electrolyte has better capacity performance and cycle stability than the battery with traditional multilayer structure prepared by coating on the surface of the electrolyte and simple mixing. This is because the electrolyte prepared by in-situ polymerization inside a battery cell has an integrated positive and negative electrode communication structure. However, there is an interface between the composite positive or negative electrode (which is prepared by simply coating and blending) and the electrolyte, thus the ion conductivity is poor.

It can be seen from Tables 1-2 that, as for the methods in Comparative Examples 1-5, since different monomers are not respectively preset on the positive and negative electrodes, different polymer structures cannot be respectively formed on the positive and negative electrodes, thereby resulting in poor cycle performance of the battery.

Comparative Examples 6, 8 and 10 all adopt the method of directly coating on the electrode surface. Although this method can also form different polymer structures on the surface of the positive and negative electrodes, there is a clear interface between the positive or negative electrode materials and the solid electrolyte, and there is also an obvious interface between the positive or negative electrode solid electrolyte and electrolyte solution, thereby resulting in poor cycle performance and capacity performance of the battery.

In the technical solutions of Comparative Examples 7, 9 and 11, different polymerization systems are respectively mixed into the positive and negative electrode slurries. In these technical solutions, although different polymer structures are respectively formed on the positive and negative electrodes, and there is no obvious interface between the positive or negative electrode material and the solid electrolyte, but there is an obvious interface between the positive or negative electrode solid electrolyte and electrolyte solution, thereby resulting in poor cycle performance of the battery.

According to the test data from the above Examples and Comparative Examples and Tables 1-2, the battery prepared by the method of the present application has no obvious interface between the positive electrode material, the positive electrode solid electrolyte, the electrolyte solution, the negative electrode solid electrolyte, and the negative electrode material, thereby it has better capacity performance and cycle performance.

Only the preferred embodiments of the present application are described above. It should be pointed out, without departing from the principles of the present application, those skilled in the art can also made several improvements and modifications which should be regarded as falling in the protection scope of the present application.

## Claims

1. An in-situ polymerized solid-state battery with a multilayer electrolyte, wherein the multilayer electrolyte comprises an oxidation-resistant polymer layer formed in-situ on the positive electrode and a reduction-resistant polymer layer formed in-situ on a negative electrode;
the in-situ polymerized solid-state battery with a multilayer electrolyte is prepared according to the following steps:
A) mixing a first preset component with a positive electrode slurry and coating to obtain a composite positive electrode; mixing a second preset component with a negative electrode slurry and coating to obtain a composite negative electrode;
B) assembling a battery cell with the composite positive electrode and composite negative electrode;
C) injecting an electrolyte solution into the battery cell to initiate the polymerization of monomers to form a multilayer electrolyte;
wherein the electrolyte solution comprises a first reactive component and optionally a second reactive component; and
the first preset component chemically reacts with the first reactive component in the electrolyte solution to generate an oxidation-resistant polymer; and the second preset component chemically reacts with the second reactive component in the electrolyte solution to generate a reduction-resistant polymer.

2. The in-situ polymerized solid-state battery with a multilayer electrolyte according to claim 1, **characterized in that** the mass fraction of the first preset component in the positive electrode slurry is 0.01-35%; and the mass fraction of the second preset component in the negative electrode slurry is 0.01-35%.

3. The in-situ polymerized solid-state battery with a multilayer electrolyte according to claim 1, **characterized in that** the mass fraction of the first reactive component in the electrolyte solution is 0.01-50%; and the mass fraction of the second reactive component in the electrolyte solution is 0.01-50%.

4. The in-situ polymerized solid-state battery with a multilayer electrolyte according to claim 1 or 2, **characterized in that** the first preset component is a first monomer or a first initiator;
the first monomer comprises any one or more selected from the group consisting of: ester monomer, carbonate monomer, sulfone monomer, isocyanate monomer, amide monomer, nitrile monomer and fluorinated monomer;
the first initiator comprises any one or more selected from the group consisting of: azo initiator, peroxyl initiator, anionic or cationic initiator, organometallic compound initiator, amine catalyst initiator and organophosphorus initiator.

5. The in-situ polymerized solid-state battery with a multilayer electrolyte according to claim 4, **characterized in that** the first monomer comprises any one or more selected from the group consisting of: vinyl acetate, dimethyl allyldicarboxylate, diethyl allylmalonate, methallyl carbonate, 1,4-butanediol diacrylate, 1,6-hexanediol diacrylate, methyl methacrylate, butyl methacrylate, vinylene carbonate, vinylethylene carbonate, methylvinyl sulfone, ethylvinyl sulfone, vinyl acetate, 1,4-butylene glycol diol, polycarbonate diol, polyethylene glycol adipate diol, ethoxylated trimethylolpropane triacrylate, pentaerythritol triacrylate, pentaerythritol tetraacrylate, dipentaerythritol pentaacrylate, dipentaerythritol hexaacrylate, acrylamide, N,N-methylene diacrylamide, N-methylmaleic amide, N-ethylmaleic amide, caprolactam, butyrolactam, maleic anhydride, acrylonitrile, ethyl 2-cyanoacrylate, butyl 2-cyano-2-acrylate, isooctyl 2-nitrile-3,3-diphenylacrylate, 1-cyclohexene acetonitrile, hexafluorobutyl methacrylate, trifluoroethyl methacrylate, dihydroxyethyl terephthalate, toluene diisocyanate, diphenylmethane diisocyanate, isophorone diisocyanate, hexamethylene diisocyanate, and hexamethylene diisocyanate.

6. The in-situ polymerized solid-state battery with a multilayer electrolyte according to claim 4, **characterized in that** the first initiator comprises any one or more selected from the group consisting of: azodiisobutyronitrile, azobisisoheptanenitrile, azobisisobutyric acid dimethyl ester, benzoyl peroxide, tert-butyl benzoylperoxide, methylethyl ketone peroxide, stannous octoate, lithium acetate, triethyl phosphorus, triphenyl phosphorus, tri-n-butyl phosphorus, tributyl tin oxide, tetrabutyl titanate, tetrabutyl zirconate, trialkyl tin alkoxide, dialkyl tin oxide, N-methylethylenediamine, dimethylformamide, triethyleneethylenediamine, methyldiethylene glycol amine, triethylenediamine, aluminum trifluoromethanesulfonate, magnesium trifluoromethanesulfonate, lithium bisfluorosulfonimide, and tin trifluoromethanesulfonate.

7. The in-situ polymerized solid-state battery with a multilayer electrolyte according to claim 1 or 2, **characterized in that** the second preset component is a second monomer or a second initiator;
the second monomer comprises any one or more selected from the group consisting of: ether compound, ether segment-containing oligomer and siloxane;
the second initiator comprises any one or more selected from the group consisting of: azo initiator, peroxyl initiator, anionic or cationic initiator, organometallic compound initiator, amine catalyst initiator and organophosphorus initiator.

8. The in-situ polymerized solid-state battery with a multilayer electrolyte according to claim 7, **characterized in that** the second monomer comprises any one or more selected from the group consisting of: polyethylene glycol dimethacrylate, polyethylene glycol diacrylate, ethoxyethoxyethyl acrylate, polyethylene glycol, 1,3-dioxolame, dioxane, hydroxypolyether silicone oil, polytetrahydrofuran ether glycol, vinylmethoxysilane, ethyl 2-(trimethylsiloxy)methacrylate, trivinylcyclotrisiloxane, tris(2-methoxyethoxy)vinylsilane, octahydroxypropyldimethylsilyl-POSS, polyetheramine, and trihydroxymethylpropane triglycidyl ether.

9. The in-situ polymerized solid-state battery with a multilayer electrolyte according to claim 7, **characterized in that** the second initiator comprises any one or more selected from the group consisting of: azodiisobutyronitrile, azobisisoheptanenitrile, azobisisobutyric acid dimethyl ester, benzoyl peroxide, tert-butyl benzoylperoxide, methylethyl ketone peroxide, stannous octoate, lithium acetate, triethyl phosphorus, triphenyl phosphorus, tri-n-butyl phosphorus, tributyl tin oxide, tetrabutyl titanate, tetrabutyl zirconate, trialkyl tin alkoxide, dialkyl tin oxide, N-methylethylenediamine, dimethylformamide, triethyleneethylenediamine, methyldiethylene glycol amine, triethylenediamine, aluminum trifluoromethanesulfonate, magnesium trifluoromethanesulfonate, lithium bisfluorosulfonimide, and tin trifluoromethanesulfonate.

10. A preparation method of an in-situ polymerized solid-state battery with a multilayer electrolyte according to any one of claims 1-9, wherein the method comprises the following steps:
A) mixing the first preset component with the positive electrode slurry and coating to obtain a composite positive electrode; mixing the second preset component with the negative electrode slurry and coating to obtain a composite negative electrode;
B) assembling a battery cell with the composite positive electrode and composite negative electrode;
C) injecting an electrolyte solution into the battery cell to initiate the polymerization of monomers to form a multilayer electrolyte;
wherein the electrolyte solution comprises the first reactive component and optionally the second reactive component; and
the first preset component chemically reacts with the first reactive component in the electrolyte solution to generate an oxidation-resistant polymer; and the second preset component chemically reacts with the second reactive component in the electrolyte solution to generate a reduction-resistant polymer.

11. The preparation method according to claim 10, **characterized in that** in step C) the polymerization is initiated by heating; the heating temperature is 25-90°C; and the heating time period is 1-120 hours.
